# FASCICULE DE BREVET EUROPEEN

(11) **EP 2 263 437 B1**
(45) Date de publication et mention de la délivrance du brevet: **30.03.2016**
(21) Numéro de dépôt: 10305583.6
(22) Date de dépôt: 03.06.2010
(51) Int. Cl.: A01D 34/00, A01D 75/00

(54) **Ustensile a usage manuel permettant de réaliser le nettoyage d'une tondeuse, ensemble incluant un tel ustensile, et tondeuse associée**
Gerät zur manuellen Verwendung für die Reinigung von Rasenmähern, Einheit, die ein solches Gerät umfasst, und entsprechender Rasenmäher
Manual utensil for cleaning mowers, assembly including such a utensil and associated mowers

(30) Priorité: 19.06.2009 FR 0954171
(43) Date de publication de la demande: 22.12.2010
(73) Titulaire: GreenOv, 69003 Lyon (FR)
(72) Inventeur: Laurens, Paul, 38260, Gillonay (FR); Allely, Mathias, 38260, Gillonay (FR); Rubenstein, Mark, 69003, Lyon (FR)
(74) Mandataire: Cabinet Laurent & Charras

(56) Documents cités:
- US-A- 3 339 220
- US-A- 4 305 175
- US-A- 4 485 516
- US-B1- 6 494 427
- US-B1- 6 780 252

## Description

### DOMAINE TECHNIQUE

L'invention se rapporte au domaine des tondeuses à gazon qui peuvent être de différent type, à savoir selon le type comportant une structure poussée manuellement par l'utilisateur ou propulsée par ses roues arrières ou bien selon le type des tondeuses dites autoportées.

Quel que soit le type de tondeuse, chacune comporte une zone de coupe dans laquelle une lame en rotation coupe le gazon, et en général un conduit permettant de canaliser et d'orienter le gazon coupé en direction d'un bac récupérateur. En outre, avec tout type de tondeuse, il est fréquent que le gazon vienne obstruer le conduit, empêchant alors l'herbe de s'évacuer à l'intérieur du bac de récupération. Le gazon coupé est alors dispersé sur le sol ou bien bloque la lame et le moteur créant une situation potentiellement dangereuse. Par conséquence le gazon coupé n'est pas collecté. La machine est alors inutilisable et l'utilisateur doit effectuer un nettoyage manuel du conduit.

Ainsi, l'invention vise plus particulièrement un ustensile permettant de procéder au nettoyage d'une tondeuse et plus particulièrement de dégager la zone de coupe ou le conduit lorsque ceux-ci sont obstrués par du gazon coupé.

### ART ANTERIEUR

De façon générale, les ustensiles permettant de nettoyer des tondeuses comportent un manche et une portion allongée, dont l'extrémité libre est équipée d'une spatule dont la forme particulière permet de dégager le gazon obstruant un conduit. Ainsi, et tel que décrit dans le document US-6 780 252, un ustensile peut comporter un manche permettant la préhension de l'ustensile, puis une tige se prolongeant par une spatule.

Cependant, ce type d'ustensile peut être dangereux à l'utilisation dans certains cas particuliers, et notamment lorsque l'utilisateur procède au nettoyage de sa tondeuse sans avoir préalablement coupé l'alimentation de celle-ci. Cette situation est pourtant une violation flagrante des recommandations des manuels d'utilisation fournis par les constructeurs mais malheureusement fort fréquente en réalité. Cette violation des recommandations existe quand l'utilisateur enlève les sécurités de la machine pour éviter de redémarrer le moteur à chaque vidage du bac de récupération de l'herbe. Il est alors possible que l'ustensile vienne rencontrer la lame de coupe de la tondeuse qui tourne généralement à une vitesse de rotation élevée de l'ordre de 3000 tours/minute, ce qui a pour effet de générer un choc violent sur l'ustensile. Un tel choc est par ailleurs susceptible de blesser l'utilisateur au niveau de son poignet, de son bras ou de ses jambes, voire même de projeter l'ustensile et donc de blesser gravement l'utilisateur ou une autre personne située dans l'environnement immédiat de la tondeuse.

Ainsi, le but de l'invention est de fournir une solution pour garantir la sécurité de l'utilisateur d'un ustensile de nettoyage de tondeuse, et ce, même dans le cas où l'utilisateur laisserait en fonctionnement sa tondeuse lors de cette opération de nettoyage du conduit d'éjection.

### EXPOSE DE L'INVENTION

L'invention concerne donc un ustensile à usage manuel permettant de réaliser le nettoyage d'une tondeuse à gazon au niveau de sa zone de coupe ou d'un conduit d'acheminement de l'herbe coupée. Un tel ustensile comporte une zone de préhension, une portion allongée et une spatule, la portion allongée étant agencée entre la zone de préhension et la spatule.

Selon l'invention, un tel ustensile se caractérise en ce que la portion allongée comporte une zone de rupture prédéterminée formée par une réduction localisée de l'épaisseur du matériau constituant la portion allongée.

Autrement dit, l'ustensile présente, au niveau de sa portion allongée, une zone dont la résistance mécanique est inférieure à celle du reste de la portion allongée. Un tel agencement permet, lorsque la lame en rotation de la tondeuse vient heurter l'ustensile, de casser l'ustensile en évitant qu'un choc d'intensité importante soit transmis à l'utilisateur. De même, un tel agencement permet d'éviter le blocage de la tondeuse par une portion de l'ustensile ou même la projection de l'ustensile.

Avantageusement, la portion allongée peut comporter une épaisseur nominale sensiblement constante en dehors de la zone de rupture prédéterminée, tandis qu'au niveau de la zone de rupture prédéterminée, la réduction localisée de l'épaisseur est comprise entre 30 et 70 % par rapport à l'épaisseur nominale de cette portion allongée.

Une telle réduction de l'épaisseur de la zone de rupture prédéterminée peut être réalisée de différentes manières et notamment lors de sa fabrication par un procédé de moulage par injection d'une matière plastique. Elle peut être également réalisée par un enlèvement de matière par tout procédé d'usinage lorsque la portion allongée est réalisée dans un matériau tel que du bois ou du métal.

En pratique, la zone de rupture prédéterminée peut s'étendre sur tout ou partie de la périphérie de la portion allongée. Ainsi, la zone de rupture s'étend sensiblement radialement par rapport à un axe défini par la direction longitudinale de la portion allongée.

Selon un mode de réalisation particulier, la zone de rupture prédéterminée peut être formée par une gorge comportant une surface de fond arrondie.

Un tel agencement est notamment avantageux lorsque l'ustensile est réalisé par un procédé de moulage, puisqu'il ne présente aucune contre-dépouille et permet donc un démoulage naturel de l'ustensile.

Avantageusement, la distance séparant la zone de rupture prédéterminée et la spatule peut être inférieure à la moitié de la longueur totale de la portion allongée.

Autrement dit, la zone de rupture prédéterminée est agencée sur la moitié de la portion allongée, dont l'une des extrémités coopère avec la spatule. Cet agencement permet notamment d'éviter qu'une portion importante de l'ustensile soit cassée lorsque la spatule vient heurter la lame en rotation de la tondeuse.

Par ailleurs, la portion allongée peut comporter une pluralité de formes distinctes.

Ainsi, selon un premier mode de réalisation, la portion allongée peut comporter une section transversale tubulaire. Dans ce cas, la zone de rupture prédéterminée peut s'étendre sur la totalité de la périphérie de la portion allongée qui comporte alors une forme de révolution autour de son axe longitudinal.

Selon un second mode de réalisation, la portion allongée peut comporter une section transversale ouverte en forme de U. Dans ce cas, la surface interne du U peut être renforcée par une pluralité de nervures visant à rigidifier la structure de l'ustensile. Dans ce cas, la zone de rupture prédéterminée s'étend sur une partie de la périphérie de l'ustensile au niveau de la face externe ou bien de la face interne du U.

En pratique, l'ustensile peut comporter des moyens de solidarisation réversibles aptes à coopérer avec des moyens de forme complémentaire solidaires d'un organe d'une tondeuse.

De tels moyens de solidarisation réversibles peuvent se présenter sous la forme de pinces aptes à s'encliqueter sur la structure tubulaire d'une tondeuse et notamment sur une traverse ou sur une portion du guidon lorsqu'il s'agit d'une tondeuse de type tractée.

L'invention vise également un ensemble comportant un ustensile tel que précédemment décrit et des moyens de solidarisation destinés à être agencés sur un organe d'une tondeuse et à coopérer avec l'ustensile.

Un tel ensemble peut donc être vendu séparément et constituer un accessoire pouvant être rapporté sur toute tondeuse déjà commercialisée. Les moyens de solidarisation peuvent comporter des colliers de serrage permettant une adaptation à différentes structures et notamment différents diamètres de tubes. Un tel ensemble peut donc être rapporté sur des tondeuses de marques différentes et constituer un élément de sécurité constamment positionné sur une tondeuse.

L'invention vise également une tondeuse à gazon équipée d'un ustensile tel que précédemment décrit et comportant des moyens de solidarisation réversibles coopérant avec l'ustensile.

En d'autres termes, un tel ustensile peut également être un organe de sécurité équipant en première monte tout type de tondeuse à gazon. Les moyens de solidarisation réversibles peuvent notamment être agencés au niveau du volet de fermeture de l'orifice du conduit d'extraction du gazon coupé. Ainsi, lorsque l'utilisateur dégage le bac de récupération de gazon, le volet se referme. L'ustensile est alors directement accessible par l'utilisateur qui souhaite nettoyer le conduit d'évacuation du gazon. Un tel positionnement de l'ustensile sur le volet de fermeture est donc tout à fait avantageux et garantit un niveau de sécurité élevé d'une telle tondeuse équipée en première monte d'un tel ustensile.

### DESCRIPTION SOMMAIRE DES FIGURES

La manière de réaliser l'invention ainsi que les avantages qui en découlent ressortiront bien du mode de réalisation qui suit, donné à titre indicatif mais non limitatif, à l'appui des figures annexées, dans lesquelles :
- la figure 1 représente une vue en perspective un premier mode de réalisation d'un ustensile conforme à l'invention;
- la figure 2 est une vue en coupe transversale de l'ustensile de la figure 1 ;
- les figures 3 à 5 représentent en perspective différentes variantes d'un ustensile conforme à l'invention ;
- la figure 6 est une vue en perspective de la face inférieure d'un tel ustensile ;
- la figure 7 est une représentation schématique en perspective d'un ensemble intégrant un ustensile et des moyens de solidarisation ;
- la figure 8 est une représentation en perspective illustrant le nettoyage d'une tondeuse de type propulsée avec un tel ustensile ;
- la figure 9 est une vue en perspective d'un volet de fermeture d'une tondeuse équipée d'un ustensile conforme à l'invention
- la figure 10 est une représentation en perspective illustrant le nettoyage d'une tondeuse de type autoportée avec un tel ustensile.

### MANIERE DE REALISER L'INVENTION

Comme déjà évoqué, l'invention concerne un ustensile à usage manuel permettant de réaliser le nettoyage d'une tondeuse à gazon.

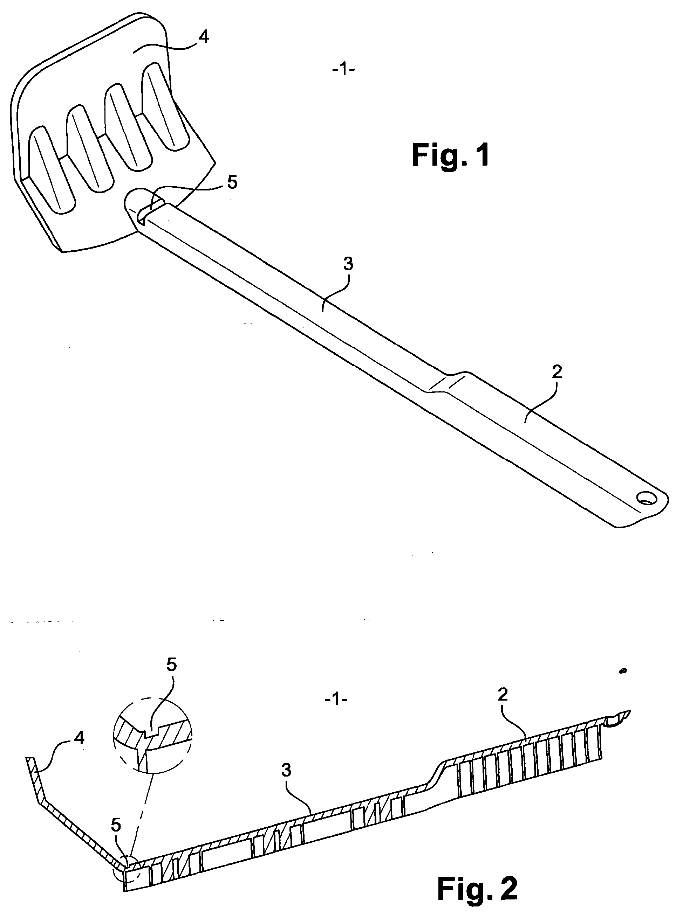

Tel que représenté aux figures 1 et 2, un ustensile peut être réalisé par un procédé d'injection d'une matière plastique à l'intérieur d'un moule. Un tel procédé de fabrication permet donc de réaliser un ustensile **1** monobloc en matériau plastique comportant une zone de préhension **2,** une portion allongée **3** et une spatule **4.** Conformément à l'invention, la portion allongée **3** comporte une zone de rupture prédéterminée **5** formée par une réduction de l'épaisseur de la portion allongée sur une longueur limitée à quelques millimètres, voire quelques centimètres. Le matériau utilisé pour réaliser un tel ustensile peut notamment être choisi parmi le groupe comprenant le polypropylène, l'ABS et le polyamide. De plus, il est également possible d'utiliser l'un de ces matériaux plastique en combinaison avec des charges telles que des fibres de verre ou analogues.

Tel que représenté, la zone de rupture prédéterminée **5** se trouve à proximité de la jonction entre la portion allongée **3** et la spatule **4.** De cette manière, lorsqu'une lame de tondeuse vient frapper la spatule **4,** celle-ci est sectionnée, emportant avec elle un tronçon de très faible longueur de la portion allongée **3.**

Tel que représenté à la figure 2, la zone de rupture prédéterminée **5** est formée par une gorge comportant une surface de fond arrondie de façon à permettre le démoulage d'un tel ustensile. Par ailleurs, la portion allongée comporte une section transversale ouverte en forme de U, dont la surface interne du U comporte une pluralité de nervures visant à rigidifier la structure de cette portion allongée **3.**

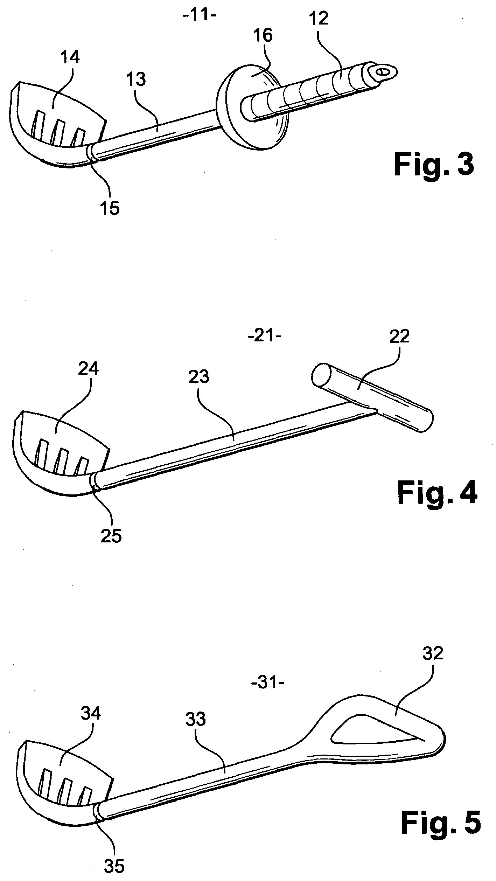

Tel que représenté aux figures 3, 4 et 5, un tel ustensile peut se présenter sous différentes formes.

Ainsi, tel que représenté à la figure 3, l'ustensile **11** peut comporter une zone de préhension **12** s'étendant coaxialement avec la portion allongée **13.** De plus, il comporte également une collerette de protection **16** visant à protéger l'utilisateur d'éventuelles projections de la spatule **14** ou de tout autre organe frappé par la lame en mouvement de la tondeuse.

Par ailleurs et tel que représenté aux figures 3, 4 et 5, la portion allongée **13, 23, 33** peut comporter une section transversale tubulaire. Dans ce cas, la zone de rupture prédéterminée **15, 25, 35** peut s'étendre sur toute la périphérie de la portion allongée correspondante **13, 23, 33.**

Tel que représenté à la figure 4, la zone de préhension **22** peut également se présenter sous la forme d'une tige perpendiculaire à la direction longitudinale de la portion allongée **23.**

Tel que représenté à la figure 5, la zone de préhension **32** de l'ustensile **31** peut également se présenter sous la forme d'une poignée s'étendant également perpendiculairement par rapport à la direction longitudinale de la portion allongée **33** et définissant un espace sensiblement triangulaire permettant l'introduction de la main de l'utilisateur.

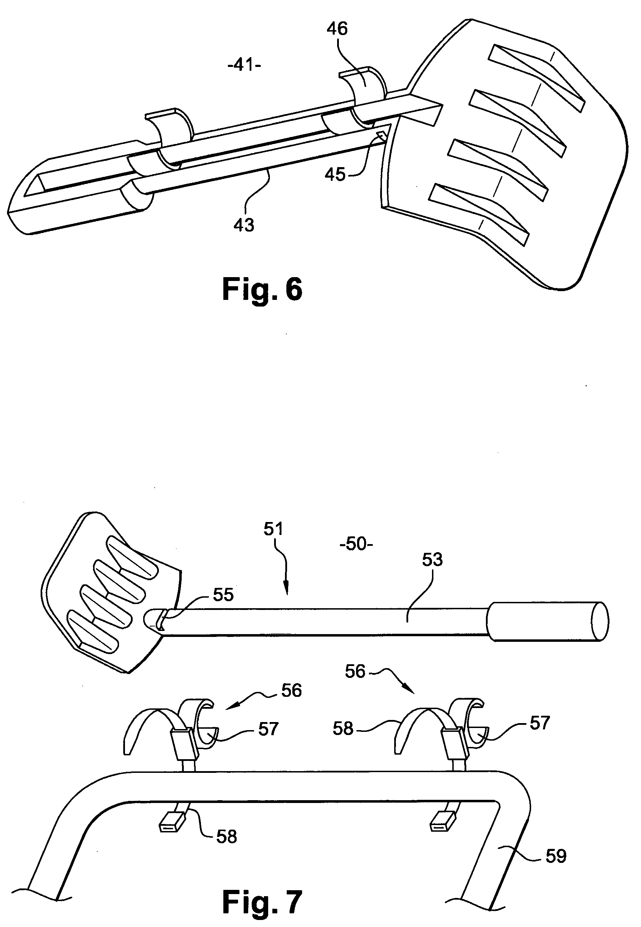

Tel que représenté à la figure 6, l'ustensile **41** peut comporter, au niveau de la face inférieure de la portion allongée **43,** des moyens de solidarisation réversibles **46** destinés à coopérer avec des moyens de forme complémentaire solidaires d'un organe d'une tondeuse, telle une barre de structure. De cette manière, l'ustensile peut être agencé sur toute tondeuse à gazon et constitue ainsi un accessoire indépendant de sécurité qui est constamment présent sur la tondeuse à gazon.

Tel que représenté à la figure 7, l'invention concerne également un ensemble **50** composé d'un ustensile **51** et de moyens de solidarisation **56** permettant la solidarisation réversible de l'ustensile **51** sur un organe de tondeuse **59.**

De tels moyens de solidarisation **56** peuvent être réalisés au moyen d'un collier de serrage **58** et de moyens d'encliquetage **57** avec lesquels la portion allongée **53** peut coopérer. Un tel ensemble **50** permet donc d'adapter l'ustensile **51** de sécurité à tout type de tondeuse, et notamment d'être monté sur des barres de structure de sections différentes. Il permet également de positionner un tel ustensile sur tout autre organe d'une tondeuse, et notamment le volet de fermeture du conduit d'évacuation du gazon. Pour ce faire, l'utilisateur doit procéder au perçage du volet de fermeture pour permettre le passage des colliers de serrage **58** au travers de la surface plane définie par le volet.

Par ailleurs les moyens d'encliquetage **57** peuvent également être remplacés par tout autre moyen de solidarisation réversible tel que notamment un boudin élastique amovible permettant d'immobiliser l'ustensile **51** au contact des moyens de solidarisations **56.**

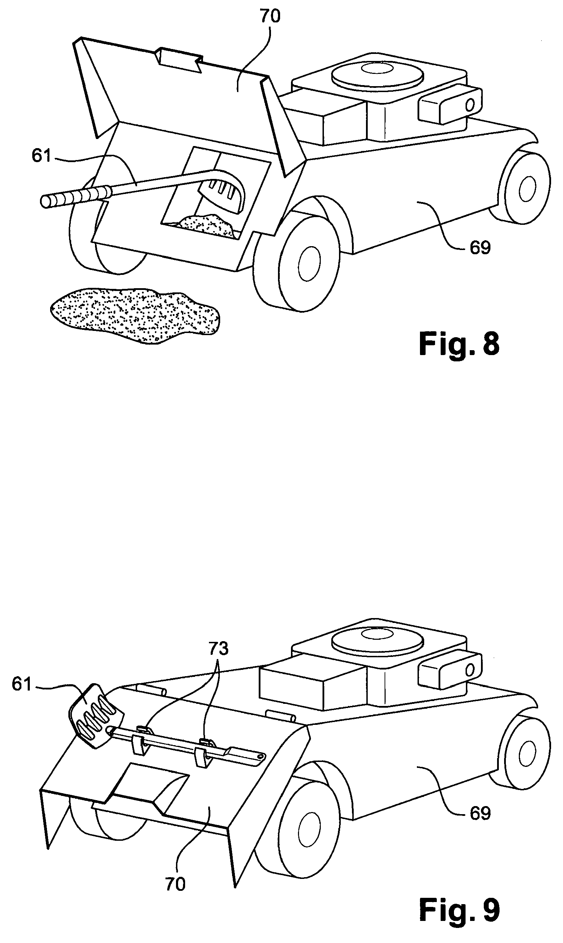

Tel que représenté à la figure 8, l'ustensile **61** permet de procéder au débourrage du conduit d'évacuation du gazon situé en dessous du volet de fermeture **70** d'une tondeuse **69.**

Une fois le nettoyage du conduit réalisé, et tel que représenté à la figure 9, l'utilisateur peut alors rapporter son ustensile **61** sur le volet de fermeture **70** grâce à des moyens de solidarisation réversible **73** pré-équipant la tondeuse **69.** Ainsi, lorsqu'un utilisateur-achète une tondeuse, celle-ci peut être pré-équipée d'un ustensile **61** visant à permettre le nettoyage du conduit d'évacuation du gazon en toute sécurité.

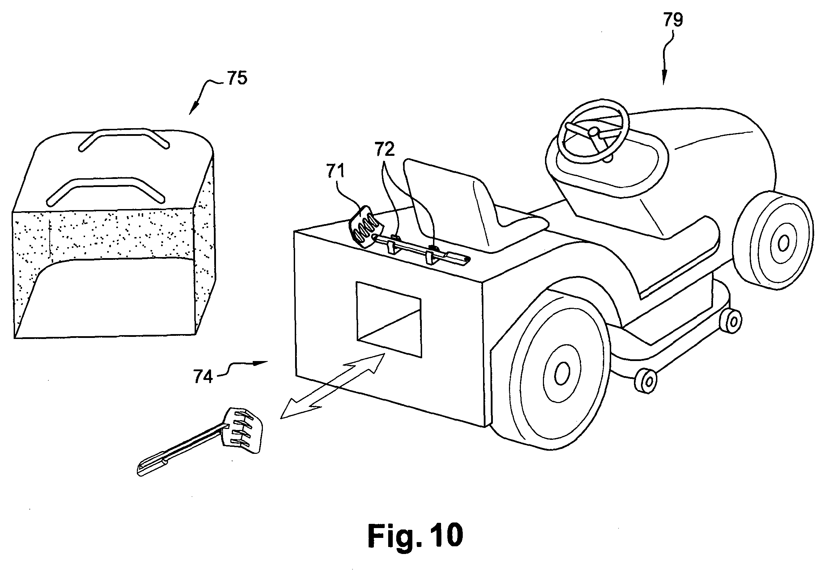

De même, et tel que représenté à la figure 10, un ustensile **71** peut être installé sur une tondeuse **79** de type autoportée et maintenu en position grâce à des moyens de solidarisation réversible **72** agencés sur une portion plane du châssis de la tondeuse.

De cette manière, lorsque l'utilisateur démonte le bac récupérateur **75** de la face arrière **74** de la tondeuse **79,** celui-ci peut directement saisir l'ustensile **71** pour effectuer le nettoyage du conduit.

Il ressort de ce qui précède qu'un ustensile, un ensemble et une tondeuse conforme à l'invention, présentent de nombreux avantages et notamment :
- ils permettent de faciliter le nettoyage d'une tondeuse, notamment au niveau de la zone de coupe ou du conduit d'évacuation du gazon ;
- ils fournissent un moyen de sécurité sûr et efficace permettant d'éviter une éventuelle blessure causée par la lame ou l'ustensile lui-même en cas de choc ;
- l'ustensile est constamment positionné sur la tondeuse et permet donc de faciliter son utilisation si un bourrage du gazon survient.

## Revendications

1. Ustensile (1, 11, 21, 31, 41, 51, 61) à usage manuel permettant de réaliser le nettoyage d'une tondeuse à gazon (59, 69), ledit ustensile (1, 11, 21, 31, 41, 51, 61) comportant une zone de préhension (2, 12, 22, 32), une portion allongée (3, 13, 23, 33, 43, 53) et une spatule (4, 14, 24, 34), ladite portion allongée (3, 13, 23, 33, 43, 53) étant agencée entre la zone de préhension (2, 12, 22, 32) et la spatule (4, 14, 24, 34), **caractérisé en ce que** la portion allongée (3, 13, 23, 33, 43, 53) comporte une zone de rupture prédéterminée (5, 15 25, 35, 45, 55) formée par une réduction localisée de l'épaisseur du matériau constituant la portion allongée (3, 13, 23, 33, 43, 53).

2. Ustensile selon la revendication 1, **caractérisé en ce que** la portion allongée (3, 13, 23, 33, 43, 53) comporte une épaisseur nominale sensiblement constante en dehors de la zone de rupture prédéterminée (5, 15 25, 35, 45, 55) et **en ce que**, au niveau de la zone de rupture prédéterminée (5), la réduction localisée de l'épaisseur est comprise entre 30 et 70% par rapport à l'épaisseur nominale de la portion allongée (3, 13, 23, 33, 43, 53).

3. Ustensile selon la revendication 1, **caractérisé en ce que** la zone de rupture prédéterminée (5, 15 25, 35, 45, 55) s'étend sur tout ou partie de la périphérie de la portion allongée (3, 13, 23, 33, 43, 53).

4. Ustensile selon la revendication 1, **caractérisé en ce que** la zone de rupture prédéterminée (5, 15 25, 35, 45, 55) est formée par une gorge comportant une surface de fond arrondie.

5. Ustensile selon la revendication 1, **caractérisé en ce que** la distance séparant la zone de rupture prédéterminée (5, 15 25, 35, 45, 55) et la spatule (4, 14, 24, 34) est inférieure à la moitié de la longueur totale de la portion allongée (3, 13, 23, 33, 43, 53).

6. Ustensile selon la revendication 1, **caractérisé en ce que** la portion allongée (13, 23, 33) comporte une section transversale tubulaire.

7. Ustensile selon la revendication 1, **caractérisé en ce que** la portion allongée (3, 43, 53) comporte une section transversale ouverte en forme de U.

8. Ustensile selon la revendication 1, **caractérisé en ce qu'**il comporte des moyens de solidarisation réversible (46) apte à coopérer avec des moyens de forme complémentaire solidaires d'un organe d'une tondeuse à gazon.

9. Ensemble (50) comportant un ustensile (51) selon l'une des revendications 1 à 8 et des moyens de solidarisations (56) destinés à être agencés sur un organe (59) d'une tondeuse gazon.

10. Tondeuse à gazon (69) équipée d'un ustensile (61) selon l'une des revendications 1 à 8, **caractérisée en ce qu'**elle comporte des moyens de solidarisation réversible (71) coopérant avec ledit ustensile (61).

## Patentansprüche

1. Gerät (1, 11, 21, 31, 41, 51, 61) zum manuellen Einsatz, zur Reinigung eines Rasenmähers (59, 69), wobei dieses Gerät (1, 11, 21, 31, 41, 51, 61) eine Grifffläche (2, 12, 22, 32), ein langgestrecktes Teilstück (3, 13, 23, 33, 43, 53) sowie eine Spachtel (4, 14, 24, 34) umfasst, wobei dieses langgestreckte Teilstück (3, 13, 23, 33, 43, 53) zwischen der Grifffläche (2, 12, 22, 32) und der Spachtel (4, 14, 24, 34) angeordnet ist, **dadurch gekennzeichnet, dass** das langgestreckte Teilstück (3, 13, 23, 33, 43, 53) eine Sollbruchstelle (5, 15 25, 35, 45, 55) enthält, die aus einer lokal begrenzten Verringerung der Dicke des Materials gebildet ist, aus der das langgestreckte Teilstück (3, 13, 23, 33, 43, 53) besteht.

2. Gerät gemäß Anspruch 1, **dadurch gekennzeichnet, dass** die nominale Dicke des langgestreckten Teilstücks (3, 13, 23, 33, 43, 53) außerhalb der Sollbruchstelle (5, 15, 25, 35, 45, 55) deutlich konstant ist und dass in Höhe der Sollbruchstelle (5) die lokal begrenzte Dicke zwischen 30 und 70% bezogen auf die nominale Dicke des langgestreckten Teilstücks (3, 13, 23, 33 ,43, 53) beträgt.

3. Gerät gemäß Anspruch 1, **dadurch gekennzeichnet, dass** die Sollbruchstelle (5, 15, 25, 35, 45, 55) sich über die gesamte oder über einen Teil der Peripherie des langgestreckten Teilstücks (3, 13, 23, 33, 43, 53) erstreckt.

4. Gerät gemäß Anspruch 1, **dadurch gekennzeichnet, dass** die Sollbruchstelle (5, 15, 25, 35, 45, 55) von einer Rille gebildet wird, die eine abgerundete Hintergrundfläche umfasst.

5. Gerät gemäß Anspruch 1, **dadurch gekennzeichnet, dass** der Abstand zwischen der Sollbruchstelle (5, 15 25, 35, 45, 55) und der Spachtel (4, 14, 24, 34) kleiner ist als die Hälfte der Gesamtlänge des langgestreckten Teilstücks (3, 13, 23, 33, 43, 53).

6. Gerät gemäß Anspruch 1, **dadurch gekennzeichnet, dass** das langgestreckte Teilstück (13, 23, 33) einen rohrförmigen Querschnitt hat.

7. Gerät gemäß Anspruch 1, **dadurch gekennzeichnet, dass** das langgestreckte Teilstücke (3, 43, 53) einen offenen, U-förmigen Querschnitt hat.

8. Gerät gemäß Anspruch 1, **dadurch gekennzeichnet, dass** es lösbare Befestigungsvorrichtungen (46) enthält, die mit den komplementär geformten, mit einem Organ eines Rasenmähers fest verbundenen Vorrichtungen zusammenwirken können.

9. Baugruppe (50) mit einem Gerät (51) gemäß einem der Ansprüche 1 bis 8 und Befestigungsmitteln (56), die zur Anbringung an einem Organ (59) eines Rasenmähers bestimmt sind.

10. mit einem Gerät (61) ausgerüsteter Rasenmäher (69) gemäß einem der Ansprüche 1 bis 8, **dadurch gekennzeichnet, dass** er lösbare Befestigungsmittel (71) enthält, die mit diesem Gerät zusammenarbeiten (61).

## Claims

1. Utensil (1, 11, 21, 31, 41, 51, 61) for manual use designed to allow the cleaning of a lawnmower (59, 69), said utensil (1, 11, 21, 31, 41, 51, 61) comprising a gripping area (2, 12, 22, 32), an elongated section (3, 13, 23, 33, 43, 53) and a spatula (4, 14, 24, 34), said elongated section (3, 13, 23, 33, 43, 53) being located between the gripping area (2, 12, 22, 32) and the spatula (4, 14, 24, 34), **characterized in that** the elongated section (3, 13, 23, 33, 43, 53) embodies a predetermined breaking area (5, 15, 25, 35, 45, 55) formed by a local reduction of the thickness of the material forming the elongated section (3, 13, 23, 33, 43, 53).

2. Utensil according to claim 1, **characterized in that** the elongated section (3, 13, 23, 33, 43, 53) has a more or less constant nominal thickness except in the predetermined breaking area (5, 15, 25, 35, 45, 55) and **in that**, at the predetermined breaking area (5), the local reduction of the thickness is included between 30 and 70% with respect to the nominal thickness of the elongated section (3, 13, 23, 33, 43, 53).

3. Utensil according to claim 1 **characterized in that** the predetermined breaking area (5, 15, 25, 35, 45, 55) extends over all or part of the perimeter of the elongated section (3, 13, 23, 33, 43, 53).

4. Utensil according to claim 1, **characterized in that** the predetermined breaking area (5, 15, 25, 35, 45, 55) consists of a groove having a rounded bottom surface area.

5. Utensil according to claim 1, **characterized in that** the distance separating the predetermined breaking area (5, 15, 25, 35, 45, 55) and the spatula (4, 14, 24, 34) is less than half the overall length of the extended section (3, 13, 23, 33, 43, 53).

6. Utensil according to claim 1, **characterized in that** the elongated section (13, 23, 33) has a transversal tubular section.

7. Utensil according to claim 1, **characterized in that** the elongated section (3, 43, 53) has a U-shaped open transversal section.

8. Utensil according to claim 1, **characterized in that** it includes reversible means of integration (46) capable of working together with a complementary shaped means integral with a lawnmower device.

9. Assembly (50) including a utensil (51) according to one of claims 1 to 8 and means of integration (56) designed to be fitted to a device (59) on a lawnmower.

10. Lawnmower (69) fitted with a utensil (61) according to one of claims 1 to 8, **characterized in that** it includes reversible integration means (71) working together with said utensil (61).
